# EUROPEAN PATENT APPLICATION

(11) **EP 3 901 389 A1**
(43) Date of publication of application: **27.10.2021**
(21) Application number: 20171414.4
(22) Date of filing: 24.04.2020
(51) Int. Cl.: E04D 11/00, A01G 9/033, D03D 11/02

(54) **GREEN ROOF AND FLEXIBLE SUBSTRATE LAYER FOR USE IN A GREEN ROOF**

(71) Applicant: Sam Groofing Tech B.V., 3707 TB Zeist (NL)
(72) Inventor: Borra, Hans, 3707 TB Zeist (NL)
(74) Representative: De Vries & Metman

(57) **Abstract**

The invention relates to a roof (15), such as a pitched roof or a flat roof, comprising a roof surface, a water resistant layer (20) covering the roof surface, a drainage layer (2), a substrate (10), and a vegetation layer (30). A flexible layer (1) extending above the water resistant layer (20) and beneath the vegetation layer (30), which flexible layer (1) comprises a plurality of pockets (4). The substrate (10) is contained in the pockets (4).

## Description

The invention relates to a roof, such as a pitched roof or a flat roof, comprising a roof surface, e.g. a decking, a water-resistant, ideally waterproof, and preferably root-resistant layer covering the roof surface, typically to prevent water from penetrating the roof surface, a drainage layer, a substrate, such as perlite, lava, bims, compost, or a composition containing one or more of these components, and a vegetation layer. The invention further relates to a strip, e.g. in the form of a roll, of a flexible material for use in the present roof and to a device, such as a plug or a flat structure, e.g. a textile sheet or a grid, for attaching, e.g. in a green roof or on an embankment, a vegetation layer to a flexible layer.

Green roofs, also known as vegetation roofs, are booming worldwide. Due to ongoing urbanization, environmental issues, the urban heat island effect, etc., the demand for more green in the cities is increasing. Roofs are a suitable place to meet the demand for more vegetation. Subsidy schemes are available in more and more cities to encourage homeowners to invest in a green roof. These subsidies are often based on the water retention capacity of the roof (typically expressed in liters of water retainable per square meter). Building a vegetation roof is a labor-intensive process because such roofs are composed of several layers.

WO 2009/156742 relates to "A modular green roof building element .. [that] can be used to modify an existing roof to turn it into a green roof. A green roof building element has walls .. which contain the growing medium in which vegetation of the green roof can grow and a floor which is water permeable but impermeable to the growing material so that water can drain through the soil (or other growing medium) out on to the roof and drain away in the usual fashion. To make a green roof, a number of modular green roof building elements .. are positioned next to each other on the roof, spaced away from the roof, for example by legs."

Optigrün Anti-Slip System S is used on roofs with a 15-45° roof pitch. It comprises a suitable construction according to static requirements, a waterproofing and root-resistant membrane covering the construction, a structured storage Fleece SSV 800, an anti-slip safety net N25/35, anti-slip sills, extensive substrate having a thickness of at least 60 mm, and a vegetation mat.

It is an object of the present invention to provide a method and a material that facilitate relatively straightforward installation and/or that result in a green roof with good resistance to shear forces.

To this end, the roof according to the present invention is characterized by a flexible layer extending above the water-resistant layer and beneath the vegetation layer, which flexible layer comprises a plurality of pockets and wherein the substrate is contained in the pockets. In an embodiment, the flexible layer comprises adjacent strips, preferably with overlapping sides and/or preferably having a width in a range from 0,5 to 1,5 meter and, in case of a pitched roof, preferably extending substantially vertically, with the pockets extending substantially horizontally.

The roof according to the present invention can be installed in a straightforward manner, e.g. by attaching the flexible layer with one side to the roof surface at the ridge or the lower rim of the roof and then rolling the flexible layer out towards the lower rim or the ridge of the roof, respectively. Further, the roof and flexible layer with pockets according to the present invention intrinsically provides good resistance to shear forces. Shear forces generally cause major complications in the construction and installation of green roofs. Further, the flexible layer can be installed with the substrate already contained in the pockets, which saves labor, reduces or avoids the risk of spilling at the construction site, and which facilitates precisely defining the amount and/or the composition of the substrate. Further, the pockets facilitate a more homogenous distribution of the substrate over the roof.

In an embodiment, the flexible layer extends from the ridge of a pitched roof or from near, e.g. less than half meter from the ridge of a pitched roof and to or to near, e.g. less than half meter from the lower rim of the roof or from or near a first edge of a flat roof to or near a second edge of a flat roof.

In another embodiment, the flexible layer is attached, e.g. directly, to the water-resistant layer, preferably by means of Velcro.

In another embodiment, the upper rim of the flexible layer, e.g. the upper rims of adjacent strips, has been fastened to the roof by means of a beam or profile secured to the roof at or near the ridge, preferably to a load bearing element of the structure, such as a ridge beam, a main beam or one or more rafters.

To increase security and ease of use after installation of the green roof, in another embodiment, one or more anchors are secured to the beam or profile for securing a safety line.

In an embodiment, the vegetation layer is fixed to the substrate layer by plugs that have been inserted, e.g. thrusted, through the vegetation layer, through the walls of the pockets and into the substrate material, or by a flat structure, such as a textile sheet or a grid carrying protrusions, such as barbs, hooks, nails or pins, that has been integrated into the vegetation layer.

In the first months after installation, green roofs are vulnerable to severe and sometimes irreparable damage resulting e.g. from storm blowing away or tearing the vegetation layer. The plugs or grid according to the present invention can be quickly installed and reduce the risk of such damage.

In an embodiment, the roots of the vegetation layer, such as a vegetation mat, e.g. a sedum mat, have grown through the (walls of) the pockets and into the substrate.

The invention also relates to a strip of a flexible material e.g. for use in the roof described above, comprising a plurality of pockets for receiving substrate or containing substrate. In an embodiment, the pockets extend laterally, e.g. obliquely or perpendicularly, across the strip or strips, i.e. from one of the long sides to the other of the long sides. In an embodiment, the pockets contain substrate and/or the strip is rolled up. Rolls of the strip can be stored and transported efficiently.

In an embodiment, the flexible material comprises a backing layer, which, when the flexible material is installed on a roof, faces the roof surface, and a further layer attached, e.g. by stitching, gluing or sealing, e.g. welding, to the backing layer and forming the pockets.

In an embodiment, the further layer comprises folds forming the pockets. In an example, the further layer is longer than the backing layer and the excess material defines the pockets.

In an embodiment, the further layer is wider than the backing layer and the excess material defines the ends of the pockets.

In another embodiment, the backing layer and/or the further layer are made from a textile material, preferably from a nonwoven. Suitable nonwovens for the backing layer include needled nonwoven (geo)textiles, also known as needle felt, made e.g. from polyolefin, e.g. polypropylene, fibers or filaments. In a refinement, the backing layer functions also as the drainage layer.

Suitable nonwovens for the further or upper layer include calendered fleece made e.g. from polyolefin, e.g. polypropylene. In general, nonwovens that allows roots from the vegetation layer to penetrate and thus reach the substrate are preferred.

To facilitate recycling, it is preferred that the backing layer and the further layer are made from the same (type of polymer), e.g. PP or PE.

Suitable substrates include perlite, lava, bims, compost, or a composition containing one or more of these components. In general, it is preferred that the substrate is granular and/or porous and/or contains no or a limited amount of organic material, e.g. less than 10 wt%, because these properties improve retention of water and nutrients for the vegetation layer and improve the ratio of the dry substrate to the wetted substrate.

In an embodiment, the substrate in the flexible layer provides a water retention of at least 10 liters per square meter of the layer, preferably at least 20 liters per square meter. Thus, the substrate serves as a substantial buffer for water and helps reduce peak loads on sewage, for instance during heavy rain.

In embodiments, the (filled) pockets have a thickness in a range from 3 to 15 centimeters, preferably in a range from 4 to 8 centimeters, a width (seen in the cross direction of the strip) in a range from 0,5 to 1,5 meters, preferably in a range from 0,8 to 1,3 meters, which width is preferably at least 90%, preferably at least 95% of the strip, and/or a length (seen in the length direction of the strip) in a range from 10 to 40 centimeters, preferably in a range from 15 to 30 centimeters and/or the strip comprises at least 5 pockets, preferably at least 10 pockets, preferably at least 15 pockets, and/or wherein the backing layer of the strip has a thickness of at least 5 millimeters, preferably at least 8 millimeters (to facilitate doubling as a drainage layer).

The invention also relates to a device, such as a plug or a flat structure, e.g. a textile sheet or a grid, for attaching, e.g. in a green roof or on an embankment, a vegetation layer to a flexible layer extending beneath the vegetation layer and comprising a plurality of pockets, the device comprising one or more elements pressing on or integrated in the vegetation layer and one or more protrusions configured to be inserted, e.g. thrusted or turned, through the walls of the pockets and into the substrate material to fix the device and thus the vegetation layer to the flexible layer.

In an embodiment, the plugs comprise flat portion, such as a spoked ring or plate, to rest on top of the vegetation layer.

In another embodiment, the device comprises a textile sheet or a grid and the vegetation layer has been integrated, e.g. has been cultivated and/or grown on and/or into the textile sheet or a grid. Thus, the vegetation layer can be delivered, e.g. in layers or on rolls, at the building site with the protrusions, e.g. barbs, hooks, nails or pins, already firmly bonded to and/or integrated in the vegetation layer.

For the sake of completeness, reference is made to the following publications.

DE 4 405 523 a casing mat that is made of a double fabric and is filled with sand, bentonite, concrete etc. and has a bottom layer and a top layer woven with the bottom layer at least on the edges running in the warp direction and can be filled to form edge beads.

JP 2003 268773 relates, in a machine translation, to "Greening of walls and rooftops of artificial structures such as concrete buildings and highways" and a vegetative bag wherein "a plurality of partitions are provided at one or a fixed width in the center from the mouth of the bag to the bottom, and the partitions are propagated. Make a continuous pocket into which the material is inserted. The culture soil is accommodated in two or more differentiated bags formed by the partition, and the mouth is closed with a suture or a stapler."

The invention will now be explained with reference to the figures, in which an example of the invention is shown.
Figures 1A to 1D are an isometric view, a top view, and a side view of a strip comprising pockets for receiving substrate.
Figure 2 is an isometric view of roll of a strip as shown in Figures 1A-1C that is being unwound and filled with substrate from hoppers.
Figure 3 is a side view of a strip as shown in Figures 1A-1C that has been filled with substrate and closed by stitching.
Figure 4 is a cross-section of a green roof according to the present invention.
Figures 5A and 5B are perspective views of a first embodiment of a plug for attaching a vegetation layer to a substrate layer.
Figures 6A and 6B are perspective views of a second embodiment of a plug for attaching a vegetation layer to a substrate layer.
Figures 7A to 7C are isometric views of a pitched roof, a hip and valley roof, and a flat roof.
Figures 8A and 8B are a top view and a side view of a grid on- and into which a vegetation layer can be grown.
Figure 9 is a cross-section of a green roof according to the present invention comprising the grid shown in Figure 8.

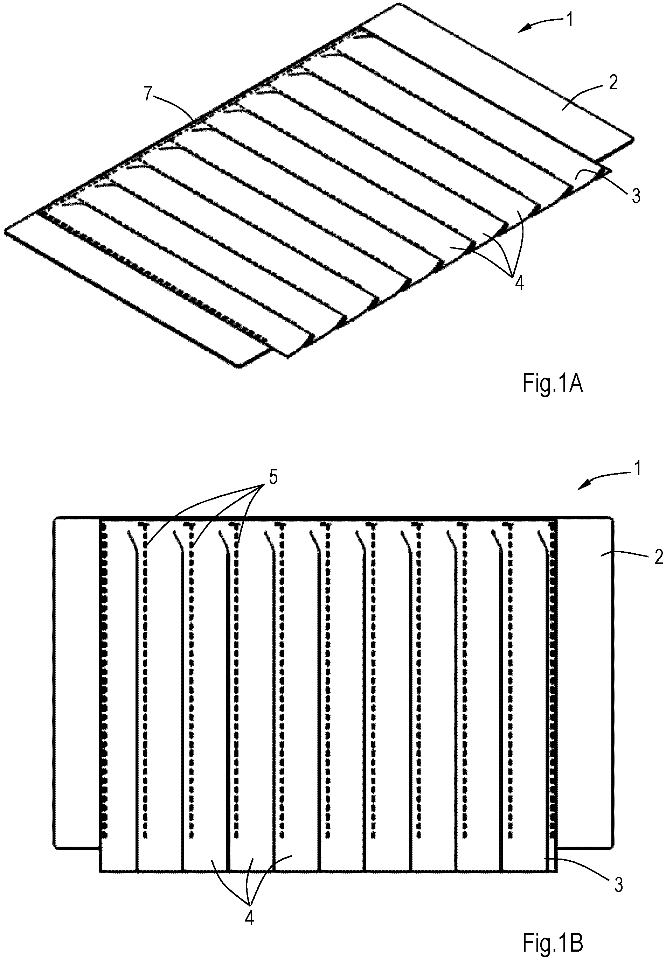

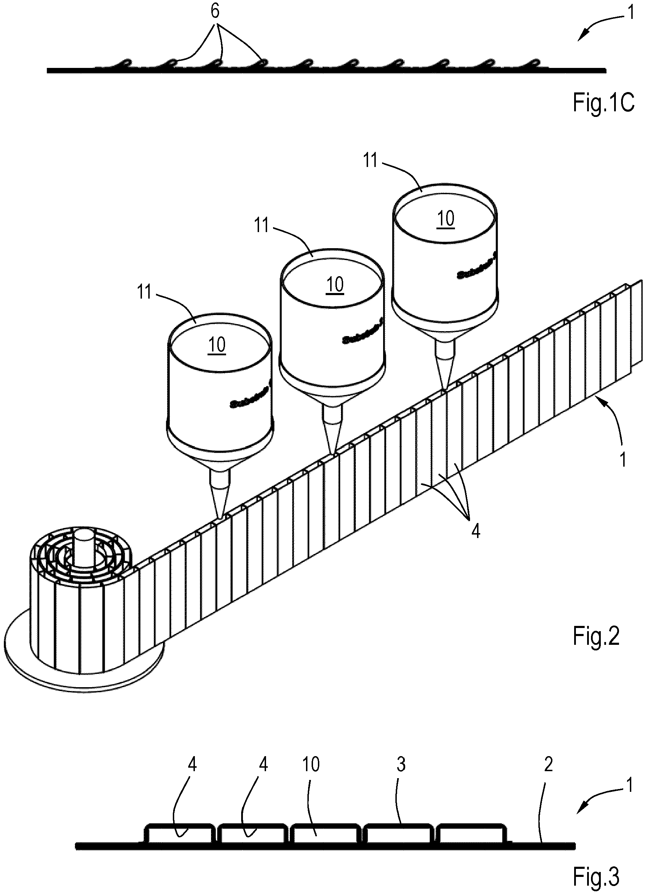

Figures 1A to 1C show a strip 1 of a flexible material for use in a green roof. The strip 1 has a width in a range from 0,8 to 1,2 meter, e.g. a width of 1,05 meter, and comprises a lower or backing layer 2 and an upper layer 3 defining the pockets 4.

The backing layer is made from a relatively thick nonwoven, in this example from a polypropylene needle felt and the upper layer is made from a polypropylene calendered fleece, which is longer and wider than the backing layer.

The fleece 3 is attached to the backing layer 2 by straight stitches 5 extending across the backing layer, from one of the long edges to the other long edge, creating folds 6 in the upper layer, and a stitch or stitches 7 attaching one of the long edges of the upper layer to one of the long edges of the backing layer. The stitches 5, 7 thus define oblong, parallel, and adjacent pockets 4 that are closed at one of the long edges of the strip and open at the other long edge of the strip. To facilitate storage and transport, the strip is wound up to form a roll.

Next, the pockets are filled with a substrate 10, in this example perlite. Filling can be carried out manually or automatically. In the example shown in Figure 2, a roll of the strip 1 is unwound with the open ends of the pockets 4 facing up. The strip is guided beneath hoppers 11 containing the substrate or components of the substrate and the material is allowed to flow into the pockets until they are filled. When the pockets are full, as shown in Figure 3, they are closed 'in line', e.g. by stitching, and the strip is the wound up to again form a roll and ready for storage or transport to a building site.

At a building site, rolls containing the dry and lightweight substrate are lifted the top or to a lower rim of the roof, a short side of the strip is secured to the roof, and the roll is unrolled from the top of the roof downwards, from the lower rim upwards, or over the (flat) roof.

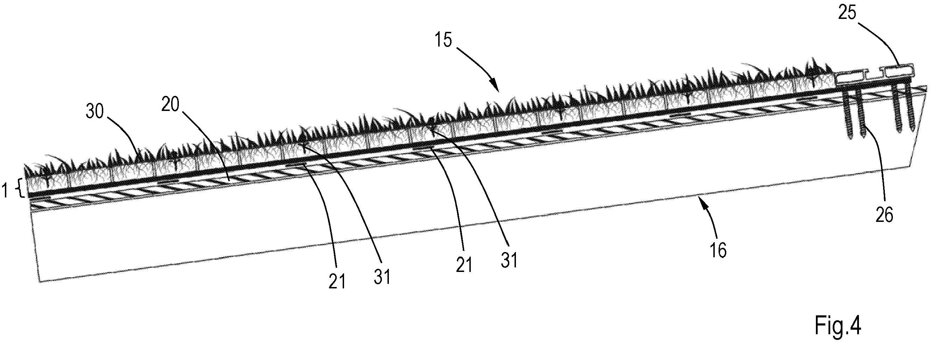

This is illustrated in Figure 4, which shows, in cross-section, a roof 15 comprising a construction 16, e.g. rafters, a ridge beam, and boards covering the sides of the roof and providing a roof surface, a water resistant layer, such as a layer 20 of bitumen or rubber, e.g. ethylene propylene diene monomer (EPDM) rubber, covering the roof surface, strips of double-sided adhesive tape or, preferably, Velcro 21, and the flexible layer 1 of strips having pockets 4 as described above.

Short sides of the strips 1 were fastened to the roof by means of one or more profiles 25 secured to the roof construction 16 at or near the ridge by long screws 26 extending in a load bearing element, e.g. the ridge beam or a rafter of the roof, and unrolled downwardly over the Velcro strips 21.

Next, a vegetation mat, e.g. a sedum mat 30 was rolled out over the flexible layer 1. To fasten the vegetation mat to the flexible layer, plugs 31 were inserted through the vegetation mat 30 and the upper nonwoven layer of the pockets 4 and into the substrate.

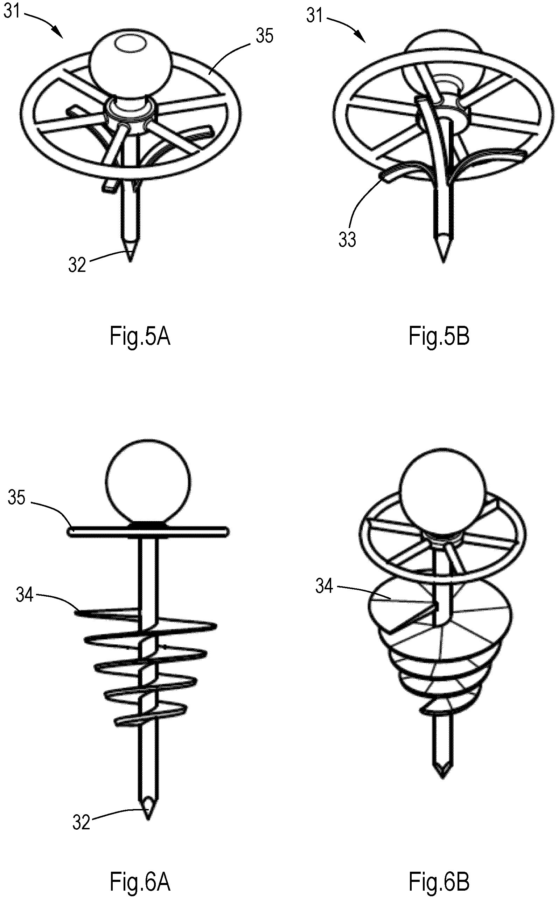

Suitable plugs 31 are illustrated in Figures 5A to 6B and comprise a pointed tip 32 one or more protrusions, such as hooks 33, barbs, or a helix 34, configured to be inserted, e.g. thrusted or turned, through the walls of the pockets 4 and into the substrate to fix the plugs 31 and thus the vegetation layer to the flexible layer 1. The plugs 31 comprise flat portion, such as a spoked ring 35 or plate, to rest on top of the vegetation layer 30.

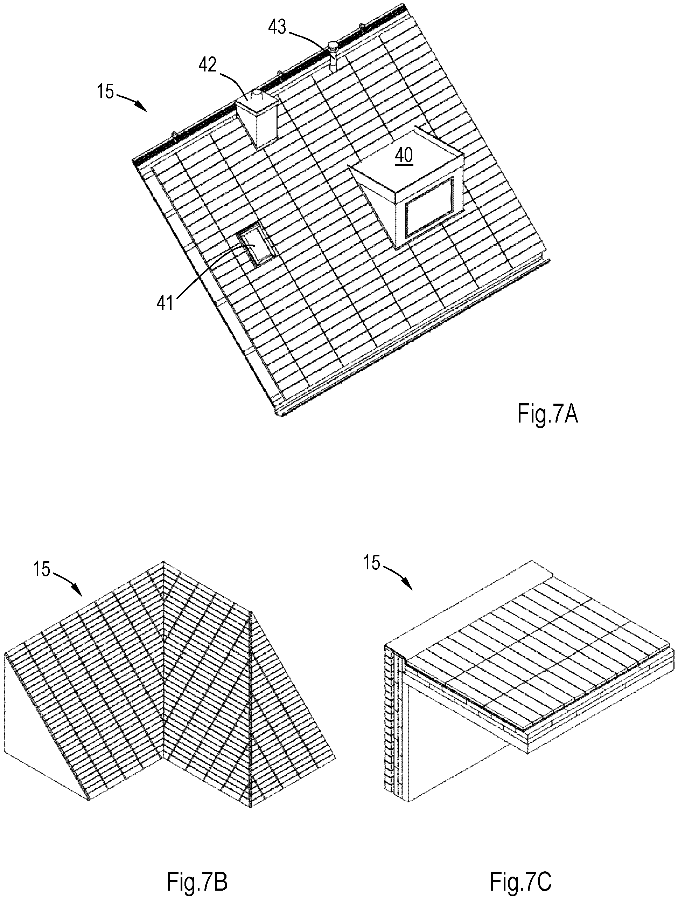

Figure 7A shows a pitched roof 15 having a dormer 40, a tilt window 41, a chimney 42, and a ventilation duct 43. Figure 7B shows a hip and valley roof 15, which inherently has substantial consequences for the shape of strips. Figure 7C shows a flat roof.

In one example, the strips have been tailormade to a specific roof, with the required features, such as openings, recesses, and cut off portions, already defined in the strips and pockets at a location remote from the building site.

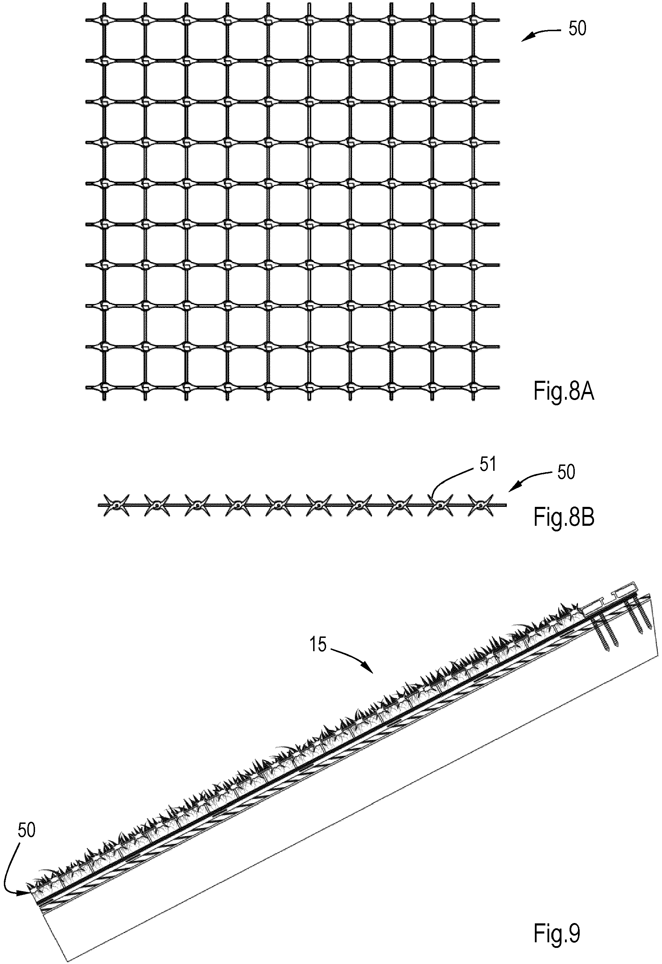

Figures 8A and 8B show a grid 50 on- and into which a vegetation layer can be grow, comprising barbs 51.

Figure 9 shows, in crnoss-section, a green roof according to the present invention comprising the grid 50 shown in Figure 8.

The invention is not limited to the described embodiments and can be varied within the framework of the claims. For instance, the flexible layer having pockets filled with a substrate is also very suitable for supporting vegetation, such as sedum, on embankments.

## Claims

1. Roof (15), such as a pitched roof or a flat roof, comprising a roof surface, a water resistant layer (20) covering the roof surface, a drainage layer (2), a substrate (10), and a vegetation layer (30), **characterized by** a flexible layer (1) extending above the water resistant layer (20) and beneath the vegetation layer (30), which flexible layer (1) comprises a plurality of pockets (4) and wherein the substrate (10) is contained in the pockets (4).

2. Roof (15) according to claim 1, wherein the flexible layer comprises adjacent strips (1), preferably with overlapping sides and/or preferably having a width in a range from 0,5 to 1,5 meter.

3. Roof (15) according to claim 1 or 2, wherein the flexible layer (1) extends from the ridge of a pitched roof or from near the ridge of a pitched roof and to or to near the lower rim of the roof or from or near a first edge of a flat roof to or near a second edge of a flat roof.

4. Roof (15) according to any one of the preceding claims, wherein the flexible layer (1) is attached to the water resistant layer (20), preferably by means of Velcro (21) .

5. Roof (15) according to any one of the preceding claims, wherein the upper rim of the flexible layer (1) has been fastened to the roof by means of a beam or profile (25) secured to the roof at or near the ridge.

6. Roof (15) according to any one of the preceding claims, wherein the vegetation layer (30)is fixed to the substrate layer (1, 10) by plugs (31) that have been inserted through the vegetation layer (30), through the walls of the pockets (4) and into the substrate (10), or by a flat structure, such as a textile sheet or a grid (50) carrying protrusions, such as hooks (51), nails or pins, that has been integrated into the vegetation layer (30).

7. Roof (15) according to any one of the preceding claims, wherein the roots of the vegetation layer (30) have grown through the pockets (4) and into the substrate (10).

8. Strip (1) of a flexible material e.g. for use in the roof (15) according to any one of the preceding claims, comprising a plurality of pockets (4) for receiving substrate (10) or containing substrate (10).

9. Roof (15) or strip (1) according to any one of the preceding claims, wherein the pockets (4) extend laterally across the strip (1) or strips (1).

10. Roof (15) or strip (1) according to any one of the preceding claims, wherein the flexible material comprises a backing layer (2) and a further layer (3) attached to the backing layer (2) and forming the pockets (4) .

11. Roof (15) or strip (1) according to claim 10, wherein the further layer (3) comprises folds (6) forming the pockets (4).

12. Roof (15) or strip (1) according to claim 10 or 11, wherein the backing layer (2) and/or the further layer (3) are made from a textile material, preferably from a nonwoven.

13. Roof (15) or strip (1) according to any one of claims 10-12, wherein the backing layer (2) functions as the draining layer.

14. Roof (15) or strip (1) according to any one of the preceding claims, wherein the pockets (4) have a thickness in a range from 3 to 15 centimeters, a width in a range from 0,5 to 1,5 meters, and/or a length in a range from 10 to 40 centimeters and/or wherein the strip (1) comprises at least 5 pockets (4), preferably at least 10 pockets, preferably at least 15 pockets, and/or wherein the backing layer (2) of the strip (1) has a thickness of at least 5 millimeters, preferably at least 8 millimeters.

15. Device, such as a plug (31) or a flat structure, e.g. a textile sheet or a grid (50), for attaching, e.g. in a green roof (15) or on an embankment, a vegetation layer (30) to a flexible layer (1) extending beneath the vegetation layer (30) and comprising a plurality of pockets (4), the device (31; 50) comprising one or more elements (35; 51) pressing on or integrated in the vegetation layer (30) and one or more protrusions (33, 34; 51) configured to be inserted through the walls of the pockets (4) and into the substrate material (10) to fix the device (31; 50) and thus the vegetation layer (30) to the flexible layer (1).
